# EUROPEAN PATENT APPLICATION

(11) **EP 4 016 287 A1**
(43) Date of publication of application: **22.06.2022**
(21) Application number: 21197494.4
(22) Date of filing: 17.09.2021
(51) Int. Cl.: G06F 8/75, G06F 8/41, G06N 20/00, G06N 3/08, G06N 3/04

(54) **METHODS AND APPARATUS TO FIND OPTIMIZATION OPPORTUNITIES IN MACHINE-READABLE INSTRUCTIONS**

(30) Priority: 21.12.2020 US 202017129821
(71) Applicant: Intel Corporation, Santa Clara, CA 95054 (US)
(72) Inventor: Gottschlich, Justin, Santa Clara, 95054 (US)
(74) Representative: Goddar, Heinz J.

(57) **Abstract**

Methods, apparatus, systems and articles of manufacture are disclosed for finding optimization opportunities in machine-readable instructions, the apparatus comprising, a cluster creator to utilize a semantic similarity model to create a first cluster of semantically similar machine-readable instruction snippets selected from a set of machine-readable instructions, a combination generator to identify a first combination of a subset of the semantically similar machine-readable instruction snippets from the first cluster of semantically similar machine-readable instruction snippets, and a snippet analyzer to utilize a syntactic similarity model to determine a syntactic similarity of the first combination of a subset of the semantically similar machine-readable instruction snippets from the first cluster of semantically similar machine-readable instruction snippets.

## Description

### FIELD OF THE DISCLOSURE

This disclosure relates generally to artificial intelligence, and, more particularly, to methods and apparatus to find optimization opportunities in machine-readable instructions.

### BACKGROUND

In recent years, researchers have shown that many heuristic-based or human-derived solutions software optimizations can be replaced by a more efficient learned solution using deep neural networks coupled with data that is representative of the typical program signature. Historically, work in the software optimization space has principally been around building such machine learned optimizations and demonstrating the higher efficiency of a learned solution from a deep neural network. Common strategies to optimize software include static compilers, profilers, dynamic (just-in-time) compilation, parallel and distributed algorithms.

### BRIEF DESCRIPTION OF THE DRAWINGS

FIG. 1 is a block diagram of an example environment in which an instruction optimizing controller operates to find optimization opportunities in machine-readable instructions in accordance with the teachings of this disclosure.
FIG. 2 is a block diagram of an example implementation of the instruction optimizing controller of FIG. 1.
FIGS. 3-4 are flowcharts representative of machine-readable instructions which may be executed to implement the example instruction optimizing controller of FIG. 2 to find optimization opportunities.
FIGS. 5-6 illustrates an example semantic analysis of instructions.
FIG. 7 illustrates an example syntactic analysis of instructions.
FIG. 8 illustrates a result of the cluster creator of FIG. 2 operating to create semantically similar clusters of machine-readable instruction snippets.
FIG. 9 illustrates a result of the combination generator of FIG. 2 operating to create combinations of semantically similar machine-readable instruction snippets.
FIG. 10 is a block diagram of an example processing platform structured to execute the instructions of FIGS. 3 and/or 4 to implement the example instruction optimizing controller of FIGS. 1 and/or 2.
FIG. 11 is a block diagram of an example software distribution platform to distribute software to client devices.

The figures are not to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular. In general, the same reference numbers will be used throughout the drawing(s) and accompanying written description to refer to the same or like parts. As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another. As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

### DETAILED DESCRIPTION

In recent years, software developers have improved machine-readable instructions (e.g., software applications) by developing machine learned optimizations. However, it is difficult to find places where a machine learned optimization would benefit a set of machine-readable instructions. In some cases, a software developer may implement two different sets of machine-readable instructions that accomplish the same task with different degrees of efficiency. Where one of the two sets of machine readable instructions performs more efficiently, it would be advantageous to replace instances of the less efficient set of machine-readable instructions. Accordingly, methods and apparatus disclosed herein identify optimization opportunities in machine readable instructions. For example, in some implementations, a machine learning algorithm is trained on sets of machine readable instructions to identify the purpose or function of the set of machine readable instructions. The example machine learning algorithm classifies similar machine readable instructions in clusters, and then determines the algorithm or structure of the similar machine readable instructions. The example machine learning algorithm compares the structure of the similar machine readable instructions, and determines that one of the two compared machine readable instructions would benefit from a machine learned optimization.

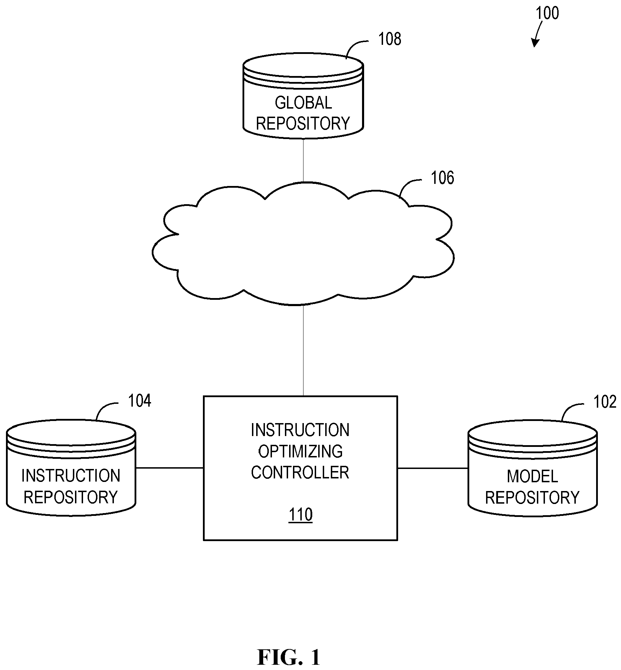

FIG. 1 is a block diagram illustrating an example environment 100 in which an example instruction optimizing controller 110 operates to find optimization opportunities in machine-readable instructions (e.g., software applications). The example environment 100 includes an example model repository 102, an example instruction repository 104, an example network 106, an example global repository 108, and the example instruction optimizing controller 110. In the illustrated example of FIG. 1, the example environment 100 shows the example model repository 102 and the example instruction repository 104 locally (e.g., directly) in communication with the example instruction optimizing controller 110. In other examples, the example model repository 102 and/or the example instruction repository 104 are in communication with the example instruction optimizing controller 110 over the example network 106 (e.g., the internet). In the illustrated example of FIG. 1, the example global repository 108 is shown in communication with the example instruction optimizing controller 110 over an example network 106, but in other examples, the example global repository 108 can be in direct communication with the example instruction optimizing controller 110 or even stored in the memory of the example instruction optimizing controller 110.

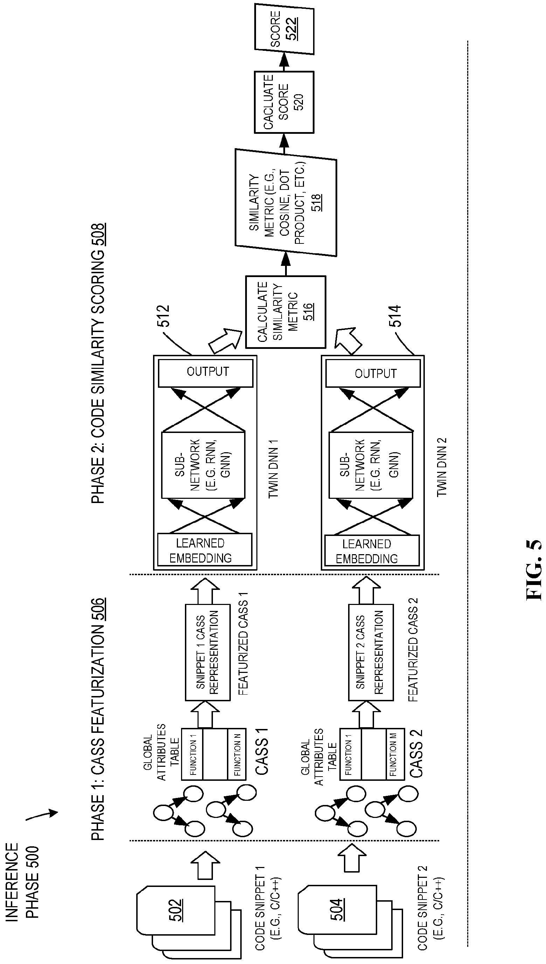

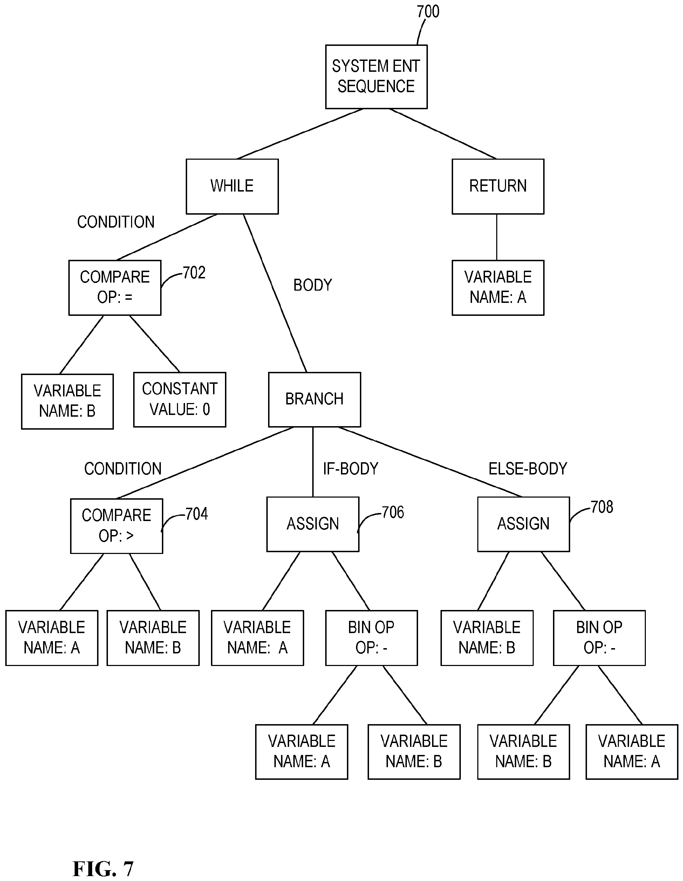

The example model repository 102 is generally configured to store semantic models (e.g., discussed in conjunction with FIGS. 5-6) and syntactic models (e.g., discussed in conjunction with FIG. 7). The example instruction optimizing controller 110 accesses the semantic models and the syntactic models from the example model repository 102. The example model repository can be editable by other users (e.g., a user in Brazil can add a model that was previously not in the example model repository 102). A full explanation of semantic models and syntactic models is given in FIGS. 5-6.

The example instruction repository 104 is generally configured to store a set of machine-readable instructions (e.g., program, software, body of code) that a developer (e.g., programmer, user, human being) wants to optimize. The example set of machine-readable instructions stored by the example instruction repository 104 may be implemented in any programming language (e.g., Swift, Java, Python, C, C++, C#, etc.). The example instruction optimizing controller 110 retrieves (e.g., accesses) the set of machine-readable instructions stored in the example instruction repository 104. Alternatively, the machine-readable instructions may be transmitted to the instruction optimizing controller 110 or may be retrieved from any other source.

The example network 106 shown is the internet. The example instruction optimizing controller 110 accesses the internet. In some examples, the example instruction repository 104 and/or the example model repository 102 exist in the example network 106.

The example global repository 108 is generally configured to store example machine-readable instructions that are characterized as optimal or highly efficient. In reality, the example optimal machine-readable instructions stored in the example global repository 108 may not be the most efficient machine-readable instructions ever discovered or written. For the purposes of this disclosure, it is assumed that the example optimal machine-readable instructions stored in the example global repository 108 are highly efficient and/or generally accepted as optimal. In the example of FIG. 1, the example instruction optimizing controller 110 is in communication over an example network 106 (e.g., the internet). A user with access to the example global repository 108 can add, modify, or even delete the example machine-readable instructions in the example global repository 108.

The example instruction optimizing controller 110 is generally configured to find optimization opportunities in machine-readable instructions. The example instruction optimizing controller 110 is able to compare example machine-readable instructions within its local (e.g., private, personal) instruction repository 104 with other sections of that same code. In some examples, the example instruction optimizing controller 110 is able to compare example machine-readable instructions from the example instruction repository 104 with example machine-readable instructions from the example global repository 108.

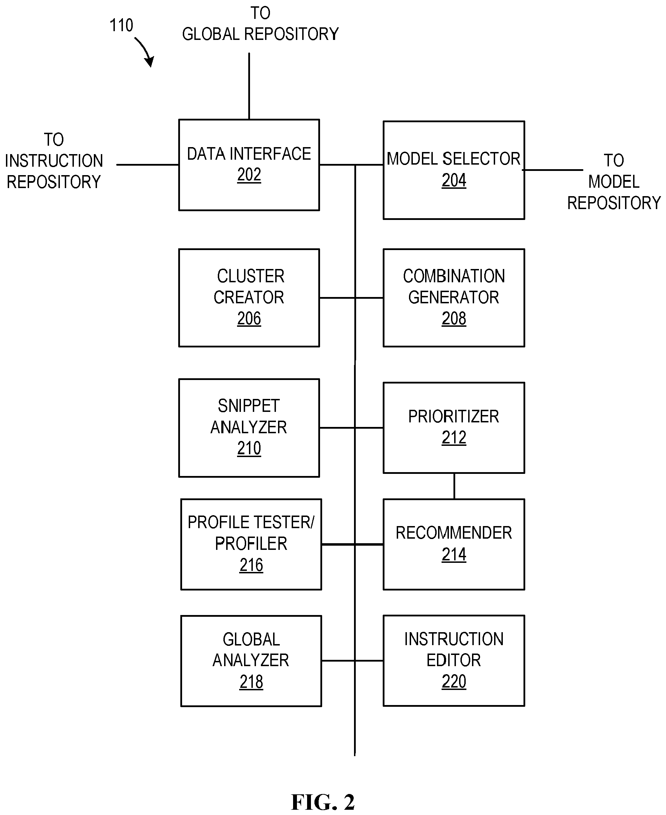

FIG. 2 is a block diagram of an example implementation of the example instruction optimizing controller 110 of FIG. 1. The example instruction optimizing controller 110 includes an example data interface 202, an example model selector 204, an example cluster creator 206, an example combination generator 208, an example snippet analyzer 210, an example prioritizer 212, an example recommender 214, an example profile tester 216, an example global analyzer 218, and an example instruction editor 220.

The example data interface 202 is generally configured to allow access to the example global repository 108 and/or the example instruction repository 104. The example data interface is able to access the memory location of the example set of machine-readable instructions the user wants to improve. The example data interface 202 is also able to communicate and load example machine-readable instructions from the example global repository 108.

The example model selector 204 is generally configured to allow access to the example model repository 102. The example model selector 204 is able to select an example semantic model (e.g., MISIM (Machine Inferred Code Similarity) or Aroma) and/or an example syntactic model (e.g., abstract syntax tree, contextual flow graph, code2vec, or Neural Code Comprehension). The example model selector 204 is able to select the (e.g., the example semantic model and/or example syntactic model) used in the identification of optimization opportunities in the set of machine-readable instructions the user wants to improve. In some examples, the example model selector 204 allows the user to specify which example semantic model and/or example syntactic model is used. The example semantic model is further discussed in conjunction with FIGS. 5-6 and the example syntactic model is further discussed in conjunction with FIG. 7.

Referring briefly to FIGS. 5-6, FIGS. 5 - 6 together represent (e.g., illustrate) an example semantic model, the *Machine Inferred Code Similarity* system (e.g., MISIM) created by Intel^{®}. The example MISIM system finds the similarity in the purpose of machine-readable instructions by analyzing the output of two machine-readable instructions. FIG. 5 illustrates the example inference phase 500 of the example MISIM system which utilizes two phases. In the example first phase 506, context-aware semantic structure (CASS) profiling occurs which determines what the example machine-readable instructions 502, 504 do. In the second phase 508, a first deep neural network 512 (e.g., a first DNN) operates on the example machine-readable instructions 502 and a second deep neural network 514 operates on the example machine-readable instructions 504. The output of the first example deep neural network 512 and the output of the second example deep neural network 514 are combined in the calculate similarity metric operation 516 to produce a similarity metric 518. The calculate score operation 520 converts the example similarity metric 516 into a semantic score 522 which is a measure of how semantically similar the example machine-readable instructions 502, 504 are. For the purpose of this disclosure, the similarity in the purpose or the result of machine-readable instructions is known as semantic similarity. There are other semantic models such as Aroma which accomplish the same task of determining the semantic similarity of machine-readable instructions.

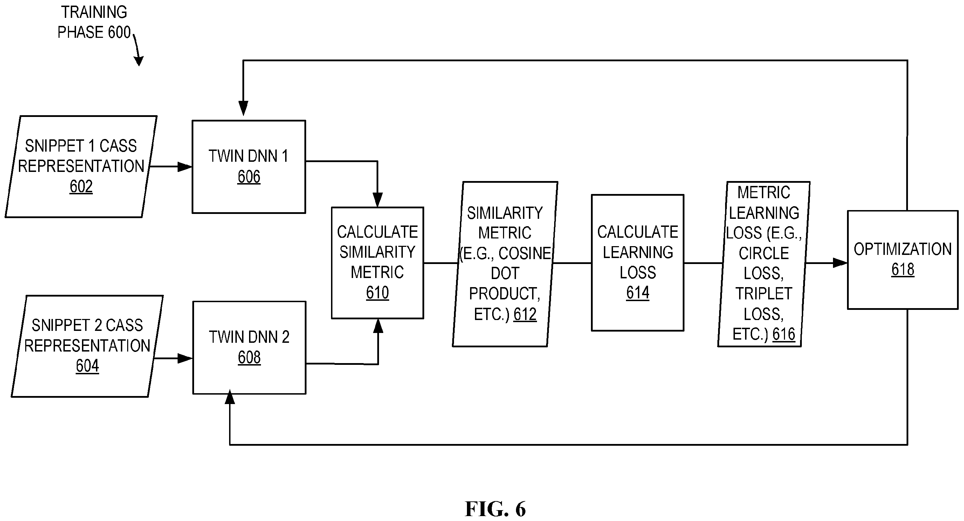

FIG. 6 is an example training phase 600 of the example MISIM system. In FIG. 6, the example CASS representation of the first snippet 602 is placed in a deep neural network 606 (e.g., a first DNN, a TWIN DNN) and the example CASS representation of the second snippet 604 is placed in a second deep neural network 608 (e.g., a second DNN). The example first DNN 606 operates on the example CASS representation of the first snippet 602 and the example second DNN 608 operates on the example CASS representation of the second snippet 604 to produce a feature vector , respectively. An example similarity metric calculator 610 takes the example feature vector of the example first DNN 606 and the example feature vector of the example second DNN 608 and calculates a similarity metric 612 such as the cosine dot product of both outputs. The example learning loss calculator 614 determines a metric learning loss 616 of the example similarity metric 612. The example optimizer 618 optimizes either the example CASS representation of the first snippet 602 or the example CASS representation of the second snippet 604 by backpropagating information back to the example first DNN 606 or the example second DNN 608.

FIG. 7 is an example syntactic model. The example syntactic model is an abstract tree diagram of an example Euclidean algorithm 700, which is an efficient method for computing the greatest common divisor of two integers. The example syntactic model shows the conditional statements 702, 704, if statement 706, else statement 708, operations, and variables. The example syntactic model is a way for a user to understand how the body of machine-readable instruction statements function together to execute the example Euclidean algorithm 700. There are other algorithms for computing the greatest common divisor of two integers, and a different algorithm would have a different abstract syntax tree, even if the other algorithm solves the same problem (e.g., computes the greatest common divisor of two integers). For the purposes of this disclosure, the similarity in the structure of the algorithm, the specific steps utilized in achieving a result, or the process is known as the syntactic similarity. There are other example syntactic models such as contextual flow graph, code2vec, or Neural Code Comprehension which outline the structure of the set of machine-readable instructions and compute the syntactic similarity of machine-readable instruction snippets.

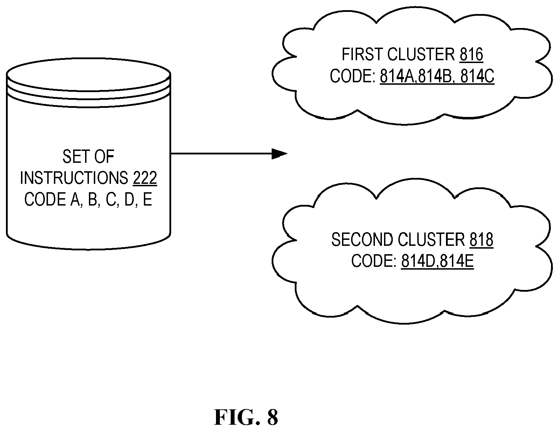

Returning to FIG. 2, the example model selector 204 has selected the example semantic model and the example syntactic model for the current process. The example cluster creator 206 is generally configured to apply the selected semantic model on the set of machine-readable instructions 222. Applying the selected semantic model on the set of machine-readable instructions 222 creates semantically distinct unlabeled clusters 816,818 (FIGS. 8-9) of semantically similar example machine-readable instruction snippets 814 (FIGS. 8-9). The example machine-readable instruction snippets 814 that are placed in the same example first cluster 816 by the example cluster creator 206 have a same (e.g., or similar) function according to the example semantic model applied by the example cluster creator 206. The example cluster creator 206 applies the selected semantic model which determines what the machine-readable snippet 814 is doing or the function performed by the machine-readable instruction snippet 814, or the result generated by the machine-readable instruction snippet 814. Example functions include sorting a list, graphing a function, calculating a derivative, saving data, etc. For example, as shown in FIG. 8, the example cluster creator 206 takes the set of machine-readable instructions and divides the machine-readable instruction snippets 814 A,B,C,D,E into a first cluster 816 with machine-readable instruction snippets 814A,B,C and a second cluster 818 with machine-readable instruction snippets 814D,E. In this example, the semantic purpose of the machine-readable instruction snippets 814 in the first cluster 816 is to sort a list (e.g., mergeSort, bubbleSort) and the semantic purpose of the code in the second cluster 118 is to graph a function.

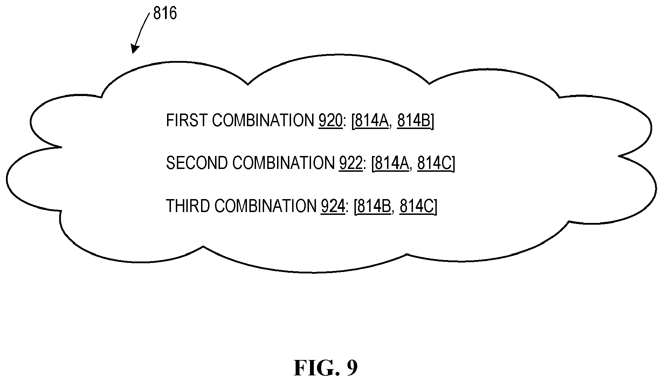

The example combination generator 208 is generally configured to group the machine-readable instruction snippets 814 of the first cluster 816 into different combinations of a predetermined size (e.g., size of two). In other examples, the predetermined size can be any integer larger than two. As shown in FIG. 9, the combination generator creates unique combinations. The example combination generator 208 takes the machine-readable instruction snippets 814 that are in the first cluster 816 and generates distinct combinations where the order of the elements does not matter. In this example, the size of each combination is two, but in other examples, the size of each combination could be three or another integer. In this example where the size of each combination is two, the first combination 920 has the machine-readable instruction snippet 814A and the machine-readable instruction snippet 814B. In this example, the machine-readable instruction snippet 814A is mergeSort and the machine-readable instruction snippet 814B is bubbleSort. The second combination 922 has the example machine-readable instruction snippets 814A and the machine-readable instruction snippets 814C, where machine-readable instruction snippets 814C is quickSort. The third combination 924 has machine-readable instruction snippets 814B and the machine-readable instruction snippets 814C. The first combination 920 is not a permutation where listing the example machine-readable instruction snippets 814Athen listing the example machine-readable instruction snippets 814B is distinct from listing the example machine-readable instruction snippets 814B, then the example machine-readable instruction snippets 814A. The combinations 920, 922, 924 are ready to be analyzed by the example snippet analyzer 210.

The example snippet analyzer 210 is generally configured to apply the selected syntactic model on the example snippet combinations in the example clusters. For example, in FIG. 9, the example snippet analyzer applies the syntactic model on the example snippet combinations 920, 922, 924 in the example first cluster 816. Similarly, the example snippet analyzer applies the syntactic model on the example snippet combinations in the example second cluster (not shown), and on any other combinations. The example syntactic model applied by the example snippet analyzer 210 determines how each machine-readable instruction snippet 814 is written. In general, example machine-readable instruction snippets 814 can solve the same problem but follow a different algorithm. For example, a first machine-readable instruction snippet could be written iteratively or recursively, but still generate the same result. For example, a machine-readable instruction snippet 814A sorts a list by following a mergeSort algorithm, while machine-readable instruction snippet 814B sorts a list by following a bubbleSort algorithm. The result from either machine-readable instruction snippet 814A or machine-readable instruction snippet 814B is a sorted list, but the process to generate the sorted list is syntactically different. The example snippet analyzer 210 finds the degree of similarity between the example machine-readable instruction snippets 814 by utilizing the example syntactic model.

The example prioritizer 212 is generally configured to prioritize the combinations of machine-readable instruction snippets. The example prioritizer 212 (e.g., a ranker) ranks the combinations of machine-readable instruction snippets based on the likelihood that the example combination has a higher probability of being an optimization opportunity. Combinations with a higher degree of semantic similarity and a higher degree of syntactic dissimilarity are higher sought as optimization opportunities. This is because there are strengths and weaknesses of every algorithm. For example, certain algorithms might be faster than other algorithms but more computationally intensive. For another example, certain algorithms might be faster on small subsets of data, while others are faster on large subsets of data. A combination with a high degree of semantic similarity and a high degree of syntactic dissimilarity is a likely optimization opportunity because one of the machine-readable instruction snippets 814 could be edited to be like(e.g., similar) the other more efficient example machine-readable instruction snippet 814. A combination with a low degree of semantic similarity would not solve similar problems, and would likely not be generated by the cluster creator 206. In the case, that a combination with a low degree of semantic similarity would not be a likely optimization opportunity because even if there is a high degree of syntactic difference, the machine-readable instruction snippets are accomplishing different tasks. A combination with a high degree of semantic similarity and a high degree of syntactic similarity would not be a likely place for an optimization opportunity because, the machine-readable instruction snippets 814 are solving similar problems with similar methods. In essence, these machine-readable instruction snippets 814 are already optimized, or the improvement would be minimal. For machine-readable instruction snippets 814 with a high semantic similarity, higher efficiency boosts come a higher syntactic difference more often than a high syntactic similarity.

In some examples, the example prioritizer 212 creates a compound score taking the degree of semantic similarity with 100% being a perfect score, and the degree of syntactic dissimilarity with 100% being a perfect score. In other examples, the example prioritizer 212 takes the degree of semantic similarity with 100% begin a perfect score and the degree of syntactic similarity with 0% being a perfect score, and creates a balanced score. For example, the balanced score can be created by calculating the harmonic mean between the semantic similarity score and the syntactic similarity score. The example prioritizer 212 ranks the example snippet combinations (920) by the compound score or the balanced score, with higher scores as more likely optimization opportunities.

The example recommender 214 flags (e.g., highlights, recommends) at least one of the highly ranked combinations as a likely optimization opportunity. In some examples, the example recommender 214 sends an email notifying a user of optimization opportunities (e.g., the flagged combinations). In other examples, the example recommender 214 highlights the two machine-readable instruction snippets 814 a target color, so the user can visually see the two machine-readable instruction snippets 814 in context of the larger set of machine-readable instructions 222. In some examples, the example recommender 214 outputs (e.g., presents) at least one of the highly ranked combinations as a likely optimization opportunity.

The example profile tester 216 is generally configured to evaluate a performance score for machine-readable instruction snippets in a first combination. For example, the example profile tester 216 executes the semantically similar example machine-readable instruction snippets 814 with the same input, and records the execution time of the semantically similar example machine-readable instruction snippets 814. In some examples, the performance score is a run-time score. In some examples, the example profile tester 216 reports notable performance differences. For example, a notable difference might be a 50% or greater performance difference in execution time. In some examples, the results of the example profile tester 216 are reported to the example recommender 214 which incorporates the results in recommending likely optimization opportunities. In some examples, the executed machine-readable instruction snippet with the higher performance score is the executed machine-readable instruction snippet with the quicker run-time.

The example global analyzer 218 is generally configured to compare example machine-readable instruction snippets with the set of machine-readable instruction snippets that are located in the example global repository 108. In some examples, the example data interface 202 accesses the example global repository 108 of machine-readable instructions that have been verified to be optimal. The example data interface 202 loads relevant machine-readable instructions from the example global repository 108 to the example global analyzer 218. The example global analyzer 218 compares the machine-readable instructions from the example global repository 108 with the first combination 920 of machine-readable instruction snippets 814. For example, a developer could have previously written a machine-readable instruction snippet 814A which is 25% efficient, and written a machine-readable instruction snippet 814B which is 50% efficient. The example snippet analyzer 210 (or the example profile tester 216) would recommend machine-readable instruction snippet 814A to be modeled after machine-readable instruction snippet 814B. However, at the time of writing the set of machine-readable instructions 222, the developer be unaware of machine-readable instructions in the example global repository 108 that are 75% efficient and accomplish the same semantic task.

The example instruction editor 220 is generally configured to apply the recommended (e.g., more optimal) machine-readable instruction snippet 814 to the set of machine-readable instructions 222 according to developer selection. In some examples, the example instruction editor 220 automatically applies the recommended (e.g., more optimal) machine-readable instruction snippet 814 to the set of machine-readable instructions 222. In other examples, the example instruction editor 220 is able to apply the developer selected instruction snippet even if the developer selected instruction snippet is not the optimal snippet. For example, a developer might not want to use an instruction snippet that is 75% efficient, but only accurate 10% of the time, and may opt for an instruction snippet that is 60% efficient, but accurate 80% of the time.

While an example manner of implementing the example instruction optimizing controller 110 of FIG. 1 is illustrated in FIG. 2, one or more of the elements, processes and/or devices illustrated in FIG. 2 may be combined, divided, re-arranged, omitted, eliminated and/or implemented in any other way. Further, the example data interface 202, the example model selector 204, the example cluster creator 206, the example combination generator 208, the example snippet analyzer 210, the example prioritizer 212, the example recommender 214, the example profile tester 216, the example global analyzer 218, the example instruction editor 220 and/or, more generally, the example instruction optimizing controller of FIG. 2 may be implemented by hardware, software, firmware and/or any combination of hardware, software and/or firmware. Thus, for example, any of the example data interface 202, the example model selector 204, the example cluster creator 206, the example combination generator 208, the example snippet analyzer 210, the example prioritizer 212, the example recommender 214, the example profile tester 216, the example global analyzer 218, the example instruction editor 220 and/or, more generally, the example instruction optimizing controller 110 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example, data interface 202, the example model selector 204, the example cluster creator 206, the example combination generator 208, the example snippet analyzer 210, the example prioritizer 212, the example recommender 214, the example profile tester 216, the example global analyzer 218, the example instruction editor 220 is/are hereby expressly defined to include a non-transitory computer readable storage device or storage disk such as a memory, a digital versatile disk (DVD), a compact disk (CD), a Blu-ray disk, etc. including the software and/or firmware. Further still, the example instruction optimizing controller of FIG. 2 may include one or more elements, processes and/or devices in addition to, or instead of, those illustrated in FIG. 2, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

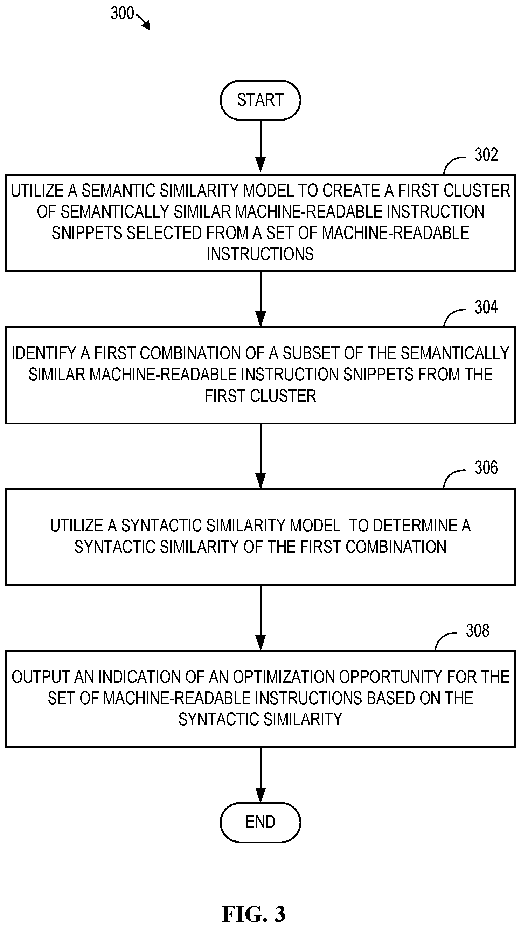

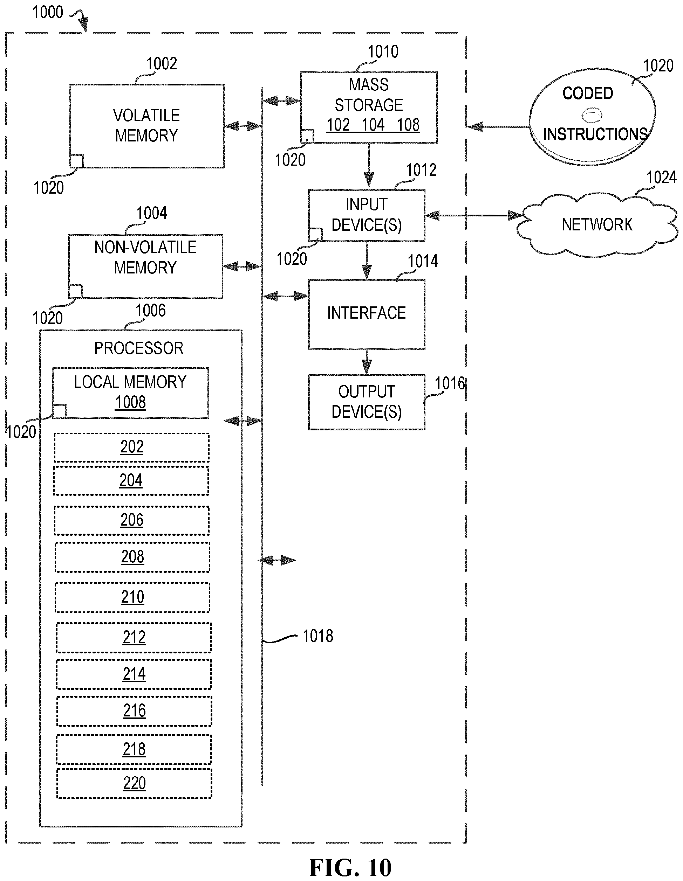

A flowchart representative of example hardware logic, machine readable instructions, hardware implemented state machines, and/or any combination thereof for implementing the instruction optimizing controller 110 of FIG. 2 is shown in FIGS. 3-4. The machine readable instructions may be one or more executable programs or portion(s) of an executable program for execution by a computer processor and/or processor circuitry, such as the processor 1006 shown in the example processor platform 1000 discussed below in connection with FIG. 10. The program may be embodied in software stored on a non-transitory computer readable storage medium such as a CD-ROM, a floppy disk, a hard drive, a DVD, a Blu-ray disk, or a memory associated with the processor 1006, but the entire program and/or parts thereof could alternatively be executed by a device other than the processor 1006and/or embodied in firmware or dedicated hardware. Further, although the example program is described with reference to the flowchart illustrated in FIGS. 3-4, many other methods of implementing the example instruction optimizing controller 110 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (opamp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 3-4 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 3 is a flowchart representative of computer readable instructions 300 that may be executed to implement the example instruction optimizing controller 110 configured to find optimization opportunities in machine-readable instructions. The example cluster creator utilizes a semantic similarity model to create a first cluster of semantically similar machine-readable instruction snippets selected from a set of machine-readable instructions (block 302). For example, the example cluster creator 206 may utilize a semantic similarity model to create a first cluster of semantically similar machine-readable instruction snippets from a set of machine-readable instructions by applying the semantic similarity model on the set of machine-readable instruction snippets and placing the machine-readable instruction snippets that are semantically similar into a first cluster. In other examples, the example cluster creator 206 may create a first cluster of semantically similar machine-readable instruction snippets from a set of machine-readable instructions by applying the semantic similarity model on the set of machine-readable instruction snippets and placing all the machine-readable instruction snippets that are semantically similar into a first cluster Again, semantically similar refers to the intent or purpose of the machine-readable instruction snippets.

The example combination generator 208 identifies a first combination of a subset of the semantically similar machine-readable instruction snippets from the first cluster (block 304). For example, the example combination generator 208 may identify a first combination of a subset of the semantically similar machine-readable instruction snippets from the first cluster by placing the semantically similar machine-readable instruction snippets in unique combinations and then selecting one of the combinations.

The example snippet analyzer 210 utilizes a syntactic similarity model to determine a syntactic similarity of the first combination (block 306). For example, the example snippet analyzer 210 may utilize a syntactic similarity model to determine a syntactic similarity of the first combination by determining the syntactic structure of each machine-readable instruction snippet in the first combination of semantically similar machine-readable instruction snippets through the use of the syntactic similarity model.

The example recommender 214 outputs an indication of an optimization opportunity for the set of machine-readable instructions based on the syntactic similarity (block 308). For example, the example recommender 214 may output an indication of an optimization opportunity for the set of machine-readable instructions based on the syntactic similarity by recommending altering a first semantically similar machine-readable instruction snippet to match a second semantically similar machine-readable instruction snippet that is syntactically different and more efficient (e.g., optimal) than the first semantically similar machine-readable instruction snippet. The example recommender 214 may output the recommendation to a user through an email. The example computer readable instructions 300 end.

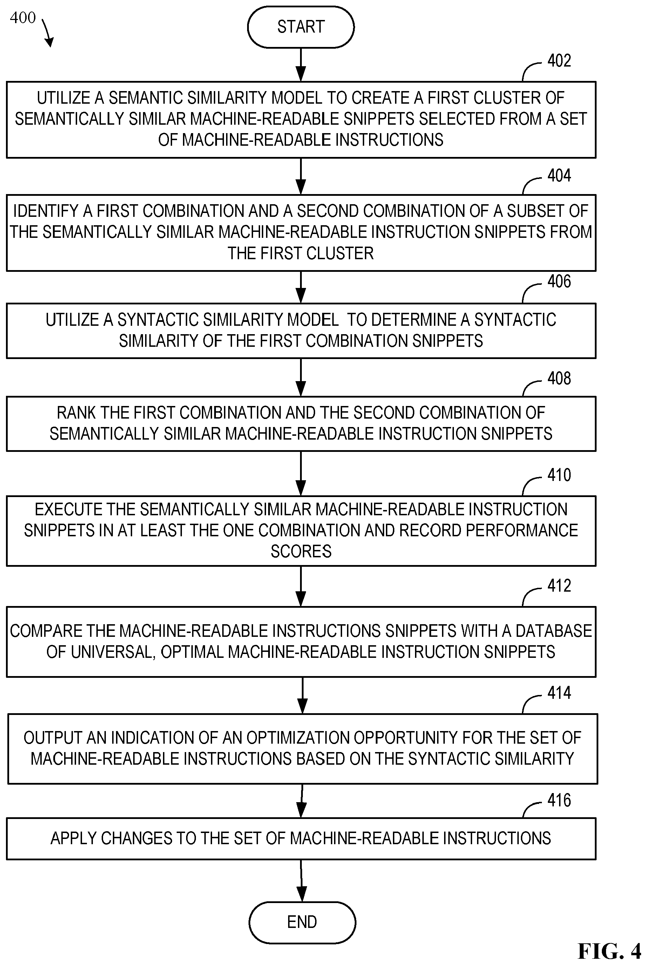

FIG. 4 is a flowchart representative of machine-readable instructions 400 that may be executed to implement the example instruction optimizing controller 110 configured to find optimization opportunities in machine-readable instructions. For example, the example cluster creator utilizes a semantic similarity model to create a first cluster of semantically similar machine-readable instruction snippets selected from a set of machine-readable instructions (block 402).

The example combination generator 208 identifies a first combination of a subset of the semantically similar machine-readable instruction snippets from the first cluster (block 404). For example, the example combination generator 208 may identify a first combination of a subset of the semantically similar machine-readable instruction snippets from the first cluster by placing the semantically similar machine-readable instruction snippets in unique combinations and then selecting one of the combinations.

The example snippet analyzer 210 utilizes a syntactic similarity model to determine a syntactic similarity of the first combination (block 406). For example, the example snippet analyzer 210 may utilize a syntactic similarity model to determine a syntactic similarity of the first combination by determining the syntactic structure of each machine-readable instruction snippet in the first combination of semantically similar machine-readable instruction snippets through the use of the syntactic similarity model.

The example prioritizer 212 ranks the first combination and the second combination of semantically similar machine-readable instruction snippets (block 408). For example, the example prioritizer 212 may rank the first combination and the second combination of semantically similar machine-readable instruction snippets by determining a score that encapsulates the example semantic similarity and the example syntactic similarity. In some examples, the example syntactic similarity is a measure of how dissimilar the machine-readable instruction snippets are.

The example profile tester 216 executes the semantically similar machine-readable instruction snippets in at least one combination and records performance scores (block 410). For example, the example profile tester 216 may execute the semantically similar machine-readable instruction snippets in at least one combination and record performance scores by loading the semantically similar machine-readable instruction snippets with a set of input data, the input data being the same for each semantically similar machine-readable instruction snippet, and run each machine-readable instruction snippets. The example profile tester may record a performance score such as how long it took to complete the operation.

The example global analyzer 218 compares the machine-readable instruction snippets with a database of universal, optimal machine-readable instruction snippets (block 412). For example, the example global analyzer 218 may compare the machine-readable instruction snippets with a database of universal, optimal machine-readable instruction snippets by accessing a global repository of machine-readable instruction snippets and utilizing the snippet analyzer to compare the syntactic similarity. The example profile tester may execute both the machine-readable instructions from the instruction repository and the machine-readable instructions from the example global repository and compare performance scores.

The example recommender 214 outputs an indication of an optimization opportunity for the set of machine-readable instructions based on the syntactic similarity (block 414). For example, the example recommender 214 may output an indication of an optimization opportunity for the set of machine-readable instructions based on the syntactic similarity by recommending altering a first semantically similar machine-readable instruction snippet to match a second semantically similar machine-readable instruction snippet that is syntactically different and more efficient (e.g., optimal) than the first semantically similar machine-readable instruction snippet. The example recommender 214 may output the recommendation to a user through an email.

The example instruction editor 220 applies changes to the set of machine-readable instructions (block 416) For example, the example instruction editor 220 may apply changes to the set of machine-readable instructions by rewriting the machine-readable instruction snippet in the style of a more efficient (e.g., optimal) machine-readable instruction snippet. In some examples, the example instruction editor 220 applies changes automatically. In other examples, the example instruction editor 220 applies changes in response to user feedback. The instructions end.

FIG. 10 is a block diagram of an example processor platform 1000 structured to execute the instructions of FIGS. 3-4 to implement the apparatus of FIG. 2. The processor platform 1000 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 1000 of the illustrated example includes a processor 1006. The processor 1006 of the illustrated example is hardware. For example, the processor 1006 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the example data interface 202, the example model selector 204, the example cluster creator 206, the example combination generator 208, the example snippet analyzer 210, the example prioritizer 212, the example recommender 214, the example profile tester 216, the example global analyzer 218, and the example instruction editor 220.

The processor 1006 of the illustrated example includes a local memory 1008 (e.g., a cache). The processor 1006 of the illustrated example is in communication with a main memory including a volatile memory 1002 and a non-volatile memory 1004 via a bus 1018. The volatile memory 1004 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 1002 may be implemented by flash memory and/or any other desired type of memory device. Access to the main memory 1002, 1004 is controlled by a memory controller.

The processor platform 1000 of the illustrated example also includes an interface circuit 1014. The interface circuit 1014 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 1012 are connected to the interface circuit 1014. The input device(s) 1012 permit(s) a user to enter data and/or commands into the processor 1006. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 1016 are also connected to the interface circuit 1014 of the illustrated example. The output devices 1016 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 1014 of the illustrated example, thus, typically includes a graphics driver card, a graphics driver chip and/or a graphics driver processor.

The interface circuit 1014 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 1024 (e.g., the network 106 of FIG. 1). The communication can be via, for example, an Ethernet connection, a digital subscriber line (DSL) connection, a telephone line connection, a coaxial cable system, a satellite system, a line-of-site wireless system, a cellular telephone system, etc. The example network 1024 allows access to an example global repository 108 which may be stored in the example mass storage 1010.

The processor platform 1000 of the illustrated example also includes one or more mass storage devices 1010 for storing software and/or data. Examples of such mass storage devices 1010 include floppy disk drives, hard drive disks, compact disk drives, Blu-ray disk drives, redundant array of independent disks (RAID) systems, and digital versatile disk (DVD) drives. The example mass storage devices 1010 stores an example model repository 102 configured to store example semantic models and example syntactic models and an example instruction repository 104 configured to store example machine-readable instructions. In some examples, the example mass storage devices 1010 stores the example global repository 108 in addition to the example model repository 102 and the example instruction repository 104.

The machine executable instructions 1020 of FIGS. 3-4 may be stored in the mass storage device 1010, in the volatile memory 1002, in the non-volatile memory 1004, and/or on a removable non-transitory computer readable storage medium such as a CD or DVD

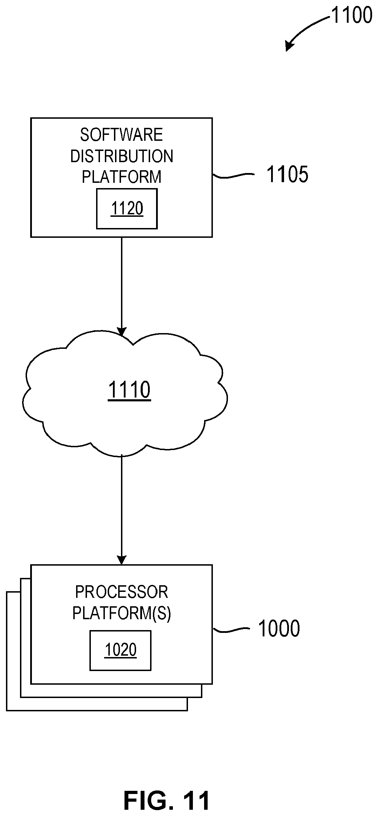

FIG. 11 is a block diagram of an example software distribution platform 1105 to distribute software (e.g., software corresponding to the example computer readable instructions 1020 of FIG. 10 to client devices such as consumers (e.g., for license, sale and/or use), retailers (e.g., for sale, re-sale, license, and/or sub-license), and/or original equipment manufacturers (OEMs) (e.g., for inclusion in products to be distributed to, for example, retailers and/or to direct buy customers). The example software distribution platform 1105 may be implemented by any computer server, data facility, cloud service, etc., capable of storing and transmitting software to other computing devices. The third parties may be customers of the entity owning and/or operating the software distribution platform. For example, the entity that owns and/or operates the software distribution platform may be a developer, a seller, and/or a licensor of software such as the example computer readable instructions 1020 of FIG. 10. The third parties may be consumers, users, retailers, OEMs, etc., who purchase and/or license the software for use and/or re-sale and/or sub-licensing. In the illustrated example, the example software distribution platform 1105 includes one or more servers and one or more storage devices. The storage devices store the computer readable instructions 1020, which may correspond to the example computer readable instructions 300 of FIG. 3 and/or the example computer readable instructions 400 of FIG. 4, as described above. The one or more servers of the example software distribution platform 1105 are in communication with a network 1110, which may correspond to any one or more of the Internet and/or any of the example networks described above (e.g., the example network 106 of FIG. 1). In some examples, the one or more servers are responsive to requests to transmit the software to a requesting party as part of a commercial transaction. Payment for the delivery, sale and/or license of the software may be handled by the one or more servers of the software distribution platform and/or via a third-party payment entity. The servers enable purchasers and/or licensors to download the computer readable instructions 1020 from the example software distribution platform 1105. For example, the software, which may correspond to the example computer readable instructions 300 of FIG. 3, may be downloaded to the example processor platform 1000, which is to execute the computer readable instructions 1020 to implement the examples disclosed herein. In some examples, one or more servers of the software distribution platform 1105 periodically offer, transmit, and/or force updates to the software (e.g., the example computer readable instructions 1032 of FIG. 10) to ensure improvements, patches, updates, etc. are distributed and applied to the software at the end user devices.

From the foregoing, it will be appreciated that example methods, apparatus and articles of manufacture have been disclosed that find optimization opportunities in machine-readable instructions. The disclosed methods, apparatus and articles of manufacture improve the efficiency of using a computing device by developing machine-readable instructions that are more efficient in a timely manner. For example, a user could manually compare machine-readable instruction snippets, and use a brute force method of making a first machine-readable instruction snippet behave like a second machine-readable instruction snippet, even if the second machine-readable instruction snippet is unrelated in semantic purpose, but a more efficient way to develop machine-readable instructions is to use the disclosed examples. The disclosed methods, apparatus and articles of manufacture are accordingly directed to one or more improvement(s) in the functioning of a computer.

Disclosed herein are example systems, apparatus and methods for finding optimization opportunities in software. Further examples and combinations thereof include the following:
Example 1 includes an apparatus for finding optimization opportunities in machine-readable instructions, the apparatus comprising a cluster creator to utilize a semantic similarity model to create a first cluster of semantically similar machine-readable instruction snippets selected from a set of machine-readable instructions, a combination generator to identify a first combination of a subset of the semantically similar machine-readable instruction snippets from the first cluster of semantically similar machine-readable instruction snippets, and a snippet analyzer to utilize a syntactic similarity model to determine a syntactic similarity of the first combination of a subset of the semantically similar machine-readable instruction snippets from the first cluster of semantically similar machine-readable instruction snippets.
Example 2 includes the apparatus of example 1, wherein the apparatus further including a recommender to output an indication of an optimization opportunity for the set of machine-readable instructions based on the syntactic similarity.
Example 3 includes the apparatus of example 2, wherein the combination generator further identifies a second combination of the subset of the semantically similar machine-readable instruction snippets from the first cluster of semantically similar machine-readable instruction snippets.
Example 4 includes the apparatus of example 3, further including a prioritzer to rank the first combination of the subset of the semantically similar machine-readable instruction snippets from the first cluster of semantically similar machine-readable instruction snippets and the second combination of the subset of the semantically similar machine-readable instruction snippets from the first cluster of semantically similar machine-readable instruction snippets.
Example 5 includes the apparatus of example 4, wherein the priortizer is to rank the first combination of the subset of the semantically similar machine-readable instruction snippets from the first cluster of semantically similar machine-readable instruction snippets and the second combination of the subset of the semantically similar machine-readable instruction snippets from the first cluster of the semantically similar machine-readable instruction snippets by the degree of semantic similarity and the degree of syntactic dissimilarity.
Example 6 includes the apparatus of example 4, wherein the recommender is to flag a combination of the first combination and the second combination of the subset of the semantically similar machine-readable instruction snippets from the first cluster of semantically similar machine-readable instruction snippets and output the flagged combination as an optimization opportunity.
Example 7 includes the apparatus of example 2, further including a model selector to select the semantic similarity model to be utilized by the cluster creator.
Example 8 includes the apparatus of example 2, further including a model selector to select the syntactic similarity model to be utilized by the snippet analyzer.
Example 9 includes the apparatus of example 2, further including a profiler to execute the semantically similar machine-readable instruction snippets in the first combination of the subset of the semantically similar machine-readable instruction snippets from the first cluster of semantically similar machine-readable instruction snippets and records at least one performance score describing at least one semantically similar machine-readable instruction snippet.
Example 10 includes the apparatus of example 9, wherein the performance score is a run-time score.
Example 11 includes the apparatus of example 9, further including an instruction editor to select one of the at least one machine readable instruction snippet based on the performance score, and apply changes to the set of machine-readable instructions according to the selected one of the at least one machine readable instruction snippet.
Example 12 includes the apparatus of example 8, further including a global analyzer to compare the semantically similar machine-readable instruction snippets in the first combination of the subset of the semantically similar machine-readable instruction snippets from the first cluster with a database of global, optimal machine-readable instruction snippets.
Example 13 includes a non-transitory computer readable storage medium comprising computer readable instructions that, when executed, cause one or more processors to, at least utilize a semantic similarity model to create a first cluster of semantically similar machine-readable instruction snippets selected from a set of machine-readable instructions, identify a first combination of a subset of the semantically similar machine-readable instruction snippets from the first cluster of semantically similar machine-readable instruction snippets, and utilize a syntactic similarity model to determine a syntactic similarity of the first combination of a subset of the semantically similar machine-readable instruction snippets from the first cluster of semantically similar machine-readable instruction snippets.
Example 14 includes the non-transitory computer readable storage medium of example 13, wherein the computer readable instructions, when executed, further cause the one or more processors to output an indication output an indication of an optimization opportunity for the set of machine-readable instructions based on the syntactic similarity.
Example 15 includes the non-transitory computer readable storage medium of example 14, wherein the computer readable instructions, when executed, further cause the one or more processors to identify a second combination of the subset of the semantically similar machine-readable instruction snippets from the first cluster of semantically similar machine-readable instruction snippets.
Example 16 includes the non-transitory computer readable storage medium of example 15, wherein the computer readable instructions, when executed, further cause the one or more processors to rank the first combination of the subset of the semantically similar machine-readable instruction snippets from the first cluster of semantically similar machine-readable instruction snippets and the second combination of the subset of the semantically similar machine-readable instruction snippets from the first cluster of semantically similar machine-readable instruction snippets.
Example 17 includes the non-transitory computer readable storage medium of example 16, wherein the computer readable instructions, when executed, further cause the one or more processors to rank the first combination of the subset of the semantically similar machine-readable instruction snippets from the first cluster of semantically similar machine-readable instruction snippets and the second combination of the subset of the semantically similar machine-readable instruction snippets from the first cluster of the semantically similar machine-readable instruction snippets by the degree of semantic similarity and the degree of syntactic dissimilarity.
Example 18 includes the non-transitory computer readable storage medium of example 16, wherein the computer readable instructions, when executed, further cause the one or more processors to flag a combination of the first combination and the second combination of the subset of the semantically similar machine-readable instruction snippets from the first cluster of semantically similar machine-readable instruction snippets and output the flagged combination as an optimization opportunity.
Example 19 includes the non-transitory computer readable storage medium of example 14, wherein the computer readable instructions, when executed, further cause the one or more processors to select the semantic similarity model to be utilized.
Example 20 includes the non-transitory computer readable storage medium of example 14, wherein the computer readable instructions, when executed, further cause the one or more processors to select the syntactic similarity model to be utilized.
Example 21 includes the non-transitory computer readable storage medium of example 14, wherein the computer readable instructions, when executed, further cause the one or more processors to execute the semantically similar machine-readable instruction snippets in the first combination of the subset of the semantically similar machine-readable instruction snippets from the first cluster of semantically similar machine-readable instruction snippets and record at least one performance score describing at least one semantically similar machine-readable instruction snippet.
Example 22 includes the non-transitory computer readable storage medium of example 21, wherein the performance score is a run-time score.
Example 23 includes the non-transitory computer readable storage medium of example 21, wherein the computer readable instructions, when executed, further cause the one or more processors to select one of the at least one machine readable instruction snippet based on the performance score, and apply changes to the set of machine-readable instructions according to the selected one of the at least one machine readable instruction snippet.
Example 24 includes the non-transitory computer readable storage medium of example 20, wherein the computer readable instructions, when executed, further cause the one or more processors to compare the semantically similar machine-readable instruction snippets in the first combination of the subset of the semantically similar machine-readable instruction snippets from the first cluster with a database of global, optimal machine-readable instruction snippets.
Example 25 includes a method for finding optimization opportunities in machine-readable instructions, the method comprising utilizing a semantic similarity model to create a first cluster of semantically similar machine-readable instruction snippets selected from a set of machine-readable instructions, identifying a first combination of a subset of the semantically similar machine-readable instruction snippets from the first cluster, and utilizing a syntactic similarity model to determine a syntactic similarity of a subset of the semantically similar machine-readable instruction snippets from the first cluster of semantically similar machine-readable instruction snippets.
Example 26 includes the method of example 25, wherein the method further includes outputting an indication of an optimization opportunity for the set of machine-readable instructions based on the syntactic similarity.
Example 27 includes the method of example 26, wherein the method further includes identifying a second combination of the subset of the semantically similar machine-readable instruction snippets from the first cluster of semantically similar machine-readable instruction snippets.
Example 28 includes the method of example 27, wherein the method further includes ranking the first combination of the subset of the semantically similar machine-readable instruction snippets from the first cluster of semantically similar machine-readable instruction snippets and the second combination of the subset of the semantically similar machine-readable instruction snippets from the first cluster of semantically similar machine-readable instruction snippets.
Example 29 includes the method of example 28, wherein the method further includes ranking the first combination of the subset of the semantically similar machine-readable instruction snippets from the first cluster of semantically similar machine-readable instruction snippets and the second combination of the subset of the semantically similar machine-readable instruction snippets from the first cluster of the semantically similar machine-readable instruction snippets by the degree of semantic similarity and the degree of syntactic dissimilarity.
Example 30 includes the method of example 28, wherein the method further includes flagging a combination of the first combination and the second combination of the subset of the semantically similar machine-readable instruction snippets from the first cluster of semantically similar machine-readable instruction snippets and outputting the flagged combination as an optimization opportunity.
Example 31 includes the method of example 26, wherein the method further includes selecting the semantic similarity model to be utilized.
Example 32 includes the method of example 26, wherein the method further includes selecting the syntactic similarity model to be utilized.
Example 33 includes the method of example 26, wherein the method further includes executing the semantically similar machine-readable instruction snippets in the first combination of the subset of the semantically similar machine-readable instruction snippets from the first cluster of semantically similar machine-readable instruction snippets and recording at least one performance score describing at least one semantically similar machine-readable instruction snippet.
Example 34 includes the method of example 33, wherein the performance score is a run-time score.
Example 35 includes the method of example 33, wherein the method further includes selecting one of the at least one machine readable instruction snippet based on the performance score, and applying changes to the set of machine-readable instructions according to the selected one of the at least one machine readable instruction snippet.
Example 36 includes the method of example 32, wherein the method further includes comparing the semantically similar machine-readable instruction snippets in the first combination of the subset of the semantically similar machine-readable instruction snippets from the first cluster with a database of global, optimal machine-readable instruction snippets.
Example 37 includes an apparatus for finding optimization opportunities in machine-readable instructions, the apparatus comprising means for utilizing a semantic similarity model to create a first cluster of semantically similar machine-readable instruction snippets selected from a set of machine-readable instructions, means for identifying a first combination of a subset of the semantically similar machine-readable instruction snippets from the first cluster, and means for utilizing a syntactic similarity model to determine a syntactic similarity of a subset of the semantically similar machine-readable instruction snippets from the first cluster of semantically similar machine-readable instruction snippets.
Example 38 includes the apparatus of example 37, wherein the apparatus further includes means for outputting an indication of an optimization opportunity for the set of machine-readable instructions based on the syntactic similarity.
Example 39 includes the apparatus of example 38, wherein the apparatus further includes means for identifying a second combination of the subset of the semantically similar machine-readable instruction snippets from the first cluster of semantically similar machine-readable instruction snippets.
Example 40 includes the apparatus of example 39, wherein the apparatus further includes means for ranking the first combination of the subset of the semantically similar machine-readable instruction snippets from the first cluster of semantically similar machine-readable instruction snippets and the second combination of the subset of the semantically similar machine-readable instruction snippets from the first cluster of semantically similar machine-readable instruction snippets.
Example 41 includes the apparatus of example 40, wherein the apparatus further includes means for ranking the first combination of the subset of the semantically similar machine-readable instruction snippets from the first cluster of semantically similar machine-readable instruction snippets and the second combination of the subset of the semantically similar machine-readable instruction snippets from the first cluster of the semantically similar machine-readable instruction snippets by the degree of semantic similarity and the degree of syntactic dissimilarity.
Example 42 includes the apparatus of example 40, wherein the apparatus further includes means for flagging a combination of the first combination and the second combination of the subset of the semantically similar machine-readable instruction snippets from the first cluster of semantically similar machine-readable instruction snippets and outputting the flagged combination as an optimization opportunity.
Example 43 includes the apparatus of example 38, wherein the apparatus further includes means for selecting the semantic similarity model to be utilized.
Example 44 includes the apparatus of example 38, wherein the apparatus further includes means for selecting the syntactic similarity model to be utilized.
Example 45 includes the apparatus of example 38, wherein the apparatus further includes means for executing the semantically similar machine-readable instruction snippets in the first combination of the subset of the semantically similar machine-readable instruction snippets from the first cluster of semantically similar machine-readable instruction snippets and recording at least one performance score describing at least one semantically similar machine-readable instruction snippet.
Example 46 includes the apparatus of example 45, wherein the performance score is a run-time score.
Example 47 includes the apparatus of example 45, wherein the apparatus further includes means for selecting one of the at least one machine readable instruction snippet based on the performance score, and applying changes to the set of machine-readable instructions according to the selected one of the at least one machine readable instruction snippet.
Example 48 includes the apparatus of example 44, wherein the apparatus further includes means for comparing the semantically similar machine-readable instruction snippets in the first combination of the subset of the semantically similar machine-readable instruction snippets from the first cluster with a database of global, optimal machine-readable instruction snippets.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

The following claims are hereby incorporated into this Detailed Description by this reference, with each claim standing on its own as a separate embodiment of the present disclosure.

## Claims

1. A method for finding optimization opportunities in machine-readable instructions, the method comprising:
utilizing a semantic similarity model to create a first cluster of semantically similar machine-readable instruction snippets selected from a set of machine-readable instructions;
identifying a first combination of a subset of the semantically similar machine-readable instruction snippets from the first cluster; and
utilizing a syntactic similarity model to determine a syntactic similarity of a subset of the semantically similar machine-readable instruction snippets from the first cluster of semantically similar machine-readable instruction snippets.

2. The method of claim 1, wherein the method further includes outputting an indication of an optimization opportunity for the set of machine-readable instructions based on the syntactic similarity.

3. The method of claim 1 or 2, wherein the method further includes identifying a second combination of the subset of the semantically similar machine-readable instruction snippets from the first cluster of semantically similar machine-readable instruction snippets.

4. The method of claim 3, wherein the method further includes ranking the first combination of the subset of the semantically similar machine-readable instruction snippets from the first cluster of semantically similar machine-readable instruction snippets and the second combination of the subset of the semantically similar machine-readable instruction snippets from the first cluster of semantically similar machine-readable instruction snippets.

5. The method of claim 4, wherein the method further includes ranking the first combination of the subset of the semantically similar machine-readable instruction snippets from the first cluster of semantically similar machine-readable instruction snippets and the second combination of the subset of the semantically similar machine-readable instruction snippets from the first cluster of the semantically similar machine-readable instruction snippets by the degree of semantic similarity and the degree of syntactic dissimilarity.

6. The method of claim 4, wherein the method further includes flagging a combination of the first combination and the second combination of the subset of the semantically similar machine-readable instruction snippets from the first cluster of semantically similar machine-readable instruction snippets and outputting the flagged combination as an optimization opportunity.

7. The method of claim 1 or 2, wherein the method further includes selecting the semantic similarity model to be utilized.

8. The method of claim 1 or 2, wherein the method further includes selecting the syntactic similarity model to be utilized.

9. The method of claim 1 or 2, wherein the method further includes executing the semantically similar machine-readable instruction snippets in the first combination of the subset of the semantically similar machine-readable instruction snippets from the first cluster of semantically similar machine-readable instruction snippets and recording at least one performance score describing at least one semantically similar machine-readable instruction snippet.

10. The method of claim 9, wherein the performance score is a run-time score.

11. The method of claim 9, wherein the method further includes:
selecting one of the at least one machine readable instruction snippet based on the performance score; and
applying changes to the set of machine-readable instructions according to the selected one of the at least one machine readable instruction snippet.

12. The method of claim 8, wherein the method further includes comparing the semantically similar machine-readable instruction snippets in the first combination of the subset of the semantically similar machine-readable instruction snippets from the first cluster with a database of global, optimal machine-readable instruction snippets.

13. An apparatus comprising means to perform a method as claimed in any preceding claim.

14. Machine readable storage including machine-readable instructions, when executed, to implement a method or realize an apparatus as claimed in any preceding claim.
